Europäisches Patentamt

European Patent Office

Office européen des brevets

(11) Veröffentlichungsnummer: **0 210 501**
A2

(12) # EUROPÄISCHE PATENTANMELDUNG

(21) Anmeldenummer: 86109488.6

(22) Anmeldetag: 11.07.86

(51) Int. Cl.⁴: **B 60 P 3/32**

(30) Priorität: 27.07.85 DE 8521747 U

(43) Veröffentlichungstag der Anmeldung:
04.02.87 Patentblatt 87/6

(84) Benannte Vertragsstaaten:
AT BE CH DE FR GB IT LI LU NL SE

(71) Anmelder: Knaus GmbH
Industriestrasse 1
D-8391 Jandelsbrunn(DE)

(72) Erfinder: Nusser, Alois, Dipl.-Ing.
Adalbert-Stifter-Strasse 12
D-8391 Jandelsbrunn(DE)

(74) Vertreter: Patentanwälte Czowalla . Matschkur +
Partner
Dr.-Kurt-Schumacher-Strasse 23 Postfach 9109
D-8500 Nürnberg 11(DE)

(54) Kraftfahrzeuganhänger, insbesondere Wohnanhänger.

(57) Kraftfahrzeuganhänger, insbesondere Wohnanhänger mit einem abwickelbar verformten Dach mit gerader Kante am vorderen Ende, mit im wesentlichen ebenen Seitenwänden und mit einer geneigten, in Draufsicht seitlich gewölbt profilierten Bugwand, wobei die Bugwand tangential an die Seitenwände anschließt.

FIG. 1

## Kraftfahrzeuganhänger, insbesondere Wohnanhänger

Die Erfindung bezieht sich auf einen Kraftfahrzeuganhänger, insbesondere Wohnanhänger, mit einem abwickelbar verformten Dach mit gerader Kante am vorderen Ende, mit im wesentlichen ebenen Seitenwänden und mit einer geneigten, in Draufsicht seitlich gewölbt profilierten Bugwand.

Bei einem aus der DE-OS 3 321 306 A1 bekanntgewordenen Kraftfahrzeuganhänger der vorstehend beschriebenen Art, wobei die seitlich gewölbte Profilierung der Bugwand zur Reduzierung des Luftwiderstandes dienen soll, ist die Ausbildung so getroffen, daß am vorderen Ende der Seitenwände zunächst ein schmaler ebener Bugstreifen vorgesehen ist von dem ausgehend erst die Wölbung der Bugwand ansetzt. Dieser 90° Winkel zur Seitenwand verlaufende ebene Seitenstreifen der Bugwand dient als Anlagefläche für eine als Kederschiene ausgebildete seitliche Abdeckleiste. Diese Ausbildung hat jedoch den Nachteil, daß ein Großteil dessen was zur Verbesserung des Luftwiderstandsbeiwerts durch die Profilierung der Bugwand erreicht wird, auf diese Art und Weise wieder verloren geht, wobei dies auch dadurch nicht wesentlich ver-

0210501

bessert werden kann, wenn man das dabei gebildete Eck mit einer nachträglich eingesetzten Profilleiste ausfüllt. Diese Profilleiste ergibt nach wie vor keinen glatten Übergang, so daß ein Abreißen der laminaren Strömung nicht verhindert werden kann. Hinzu kommt darüber hinaus noch, daß das Aufbringen einer derartigen gesonderten Profilleiste sowohl montagetechnisch als auch von den Kosten her einen erheblichen Nachteil darstellt.

Der Erfindung liegt daher die Aufgabe zugrunde, einen Kraftfahrzeuganhänger der eingangs genannten Art so auszugestalten, daß bei einfachem Aufbau ein reduzierter Luftwiderstandsbeiwert erreicht wird.

Zur Lösung dieser Aufgabe ist erfindungsgemäß vorgesehen,daß die Bugwand tangential an die Seitenwände anschließt, wobei bevorzugt die Verbindungskanten der Bugwand zum Dach und zu den Seitenwänden durch Gummileisten und eine darüberliegende Halteleiste, vorzugsweise aus Aluminium, abgedeckt sind.

Durch diese Ausbildung wird eine wesentliche Verringerung des Luftwiderstandsbeiwerts erreicht, wobei darüber hinaus durch die Abdeckleiste mit der bevorzugt darunter gelegten Gummidichtleiste auch eine ausreichende vollständige Abdichtung der Stoßfuge erzielt werden kann, selbst wenn nicht - wie bei der vorbekannten Ausführungsform - eine gewinkelte, die Kante umgreifende Abdeckleiste aufgebracht werden kann.

Bei der erfindungsgemäßen Konstruktion ergibt sich eine kritische Dichtstelle an den zusammentreffenden Verbindungskanten im Übergangsbereich Bugwand, Dach und Seitenwand, an der T-förmig drei Kanten in einer Ecke aneinanderstoßen. Um Schwierigkeiten mit der Abdichtung an dieser Stelle zu vermeiden, an der keine durchgehenden Abdeckleisten mehr vorgesehen sind, sondern auch die Abdeckleisten selbst zusammenstoßen müssen - bevorzugt wurd die Abdeckleiste zwischen Seitenwand und Dach wieder als gewinkelte Kante ausgebildet bei der die Dichtung sowieso einfacher zu bewerkstelligen ist - ist in Weiterbildung der Erfindung eine diesen kritischen Bereich überdeckender Abdichtkasten vorgesehen, vorzugsweise in Form einer Leuchte. Durch diese Ausbildung des Abdeckkastens als Leuchte, wobei eine solche Leuchte sowieso vorgesehen werden muß, ergibt sich ohne irgendwelche Verkomplizierung des Gesamtaufbaus eine absolut sichere Abdichtung auch an dieser genannten kritischen Stoßstelle.

Schließlich liegt es auch noch im Rahmen der Erfindung, die Bugwand aus einem größeren Oberteil und einem kleineren Unterteil auszubilden, die - von ihrer Verbindungskante ausgehend - nach rückwärts geneigt verlaufen. Die somit quasi in einem Längsschnitt V-förmige Bugwand ermöglicht noch eine weitere Reduzierung und Verbesserung des Luftwiderstandsbeiwerts.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

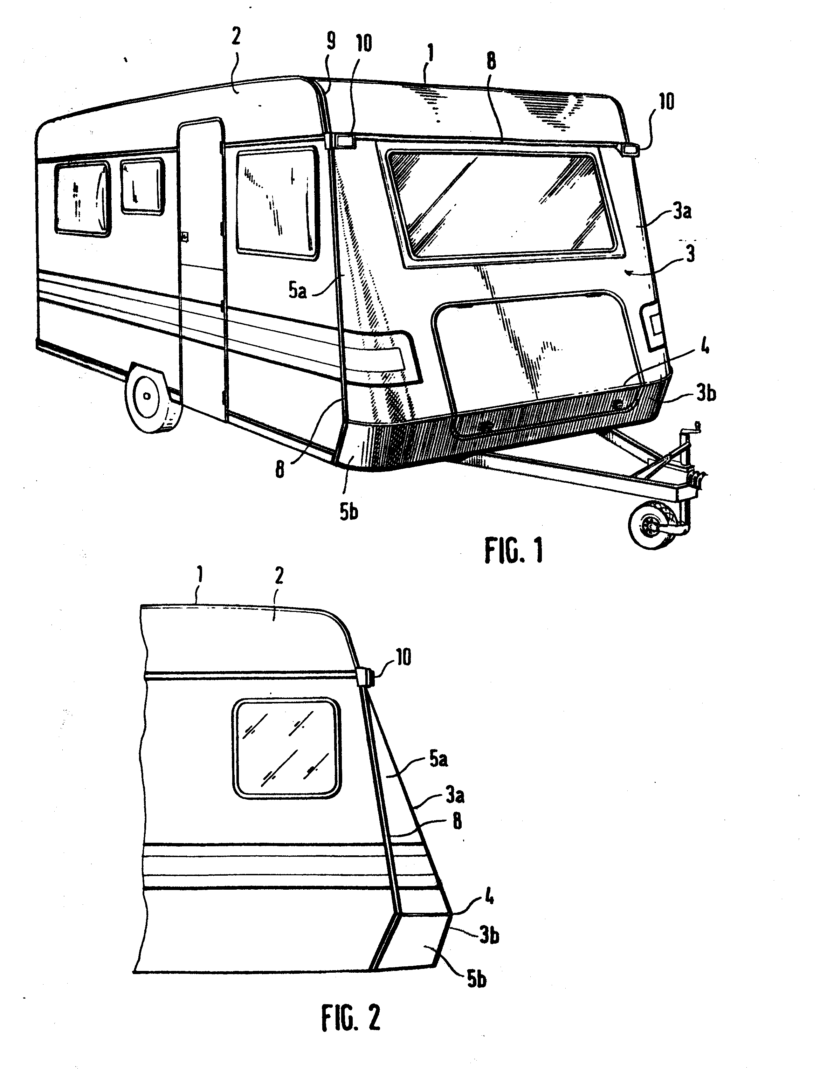

Fig. 1 eine perspektivische Ansicht eines erfindungsgemäßen Wohnanhängers von vorne,

Fig. 2 eine Teilseitenansicht des vorderen Bereichs des Wohnanhängers,

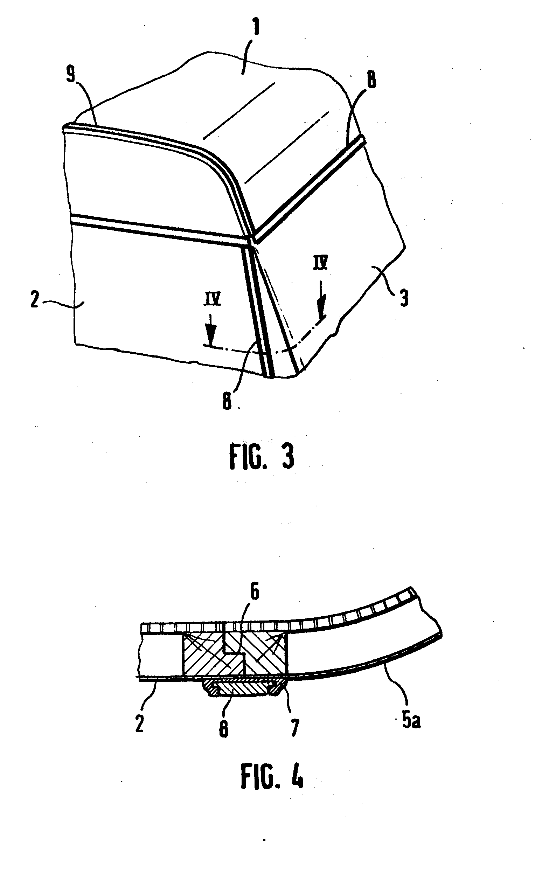

Fig. 3 eine vergrößerte perspektivische Ansicht des Obergangsbereichs Bugwand, Dach und Seitenwand ohne Abdeckleuchte und

Fig. 4 einen Schnitt längs der Linie IV-IV in Figur 3.

Der dargestellte Wohnanhänger mit abwickelbar verformtem Dach 1 und im wesentlichen ebenen Seitenwänden 2 ist mit einer Bugwand 3 versehen, die aus einem größeren oberen Teil 3 a und einem kleineren Unterteil 3 b besteht, die von der Verbindungskante 4 ausgehend jeweils nach rückwärts geneigt sind. Beide Teile 3 a und 3 b der Bugwand sind in Draufsicht seitlich gewölbt profiliert, wobei die Ausbildung so getroffen ist, daß die gewölbten Seitenteile 5 a bzw. 5 b tangential stoßfrei beidseits in die Seitenwände 2 übergehen, wobei die - wie Figur 4 zeigt - gestufte Verbindungskante 6 von einer Gummileiste 7 und einer darüberliegenden Aluminiumleiste 8 abgedeckt ist.

Die Kante zwischen den Seitenwänden 2 und dem Dach 1 ist - wie üblich - von einer gewinkelten Abdeckleiste 9 übergriffen, die im Übergangsbereich Bugwand, Dach und Seitenwand mit den ebenen mit einer Gummileiste unterlegten Halteleiste 8 zusammenstößt. Um dabei Abdichtschwierigkeiten an dieser Stoßstelle zu vermeiden - in entsprechender Weise kann auch zwischen dem Oberteil der Seitenwand und dem darunterliegenden Unterteil noch eine weitere in den Figuren angedeutete Abdeckleiste vorgesehen sein - ist jeweils in diesem Übergangsbereich eine Leuchte 10 angeordnet, die einen Abdichtkasten bildet, der die notwendigerweise bestehenden Undichtigkeiten an der Stoßecke der Aluminiumabdeckleisten in diesem Bereich kompensiert. Im Gegensatz zu vorbekannten Wohnanhängern mit gewölbter Bugwand mit einer Polyurethanschaumschicht als Isolier- und Füllmaterial zwischen der Außenbeflankung und der inneren Verkleidung soll erfindungsgemäß die Bugwand als Sandwich-Konstruktion aufgebaut sein, bei der die Innenwand, ein Skelett aus Holzleisten oder dgl., ein Isoliermaterial und das außenliegende Blech unter Verwendung eines geeigneten Schaumklebers und unter Druck und Temperatur fest miteinander verklebt sind.

**Patentansprüche**

1. Kraftfahrzeuganhänger, insbesondere Wohnanhänger mit einem abwickelbar verformten Dach mit gerader Kante am vorderen Ende, mit im wesentlichen ebenen Seitenwänden und mit einer geneigten, in Draufsicht seitlich gewölbt profilierten Bugwand, dadurch gekennzeichnet, daß die Bugwand (3) tangential an die Seitenwände (2) anschließt.

2. Kraftfahrzeuganhänger nach Anspruch 1, dadurch gekennzeichnet, daß die Verbindungskanten der Bugwand (3) zum Dach (1) und zu den Seitenwänden (2) durch Gummileisten (7) und eine darüberliegende Halteleiste (8) vorzugsweise aus Aluminium, abgedeckt sind.

3. Kraftfahrzeuganhänger nach Anspruch 2, dadurch gekennzeichnet, daß die zusammentreffenden Verbindungskanten im Obergangsbereich Bugwand (3), Dach (1) und Seitenwand (2) durch einen Abdichtkasten verdeckt sind.

4. Kraftfahrzeuganhänger nach Anspruch 3, dadurch gekennzeichnet, daß die Abdichtkästen als Leuchten (10) ausgebildet sind.

5. Kraftfahrzeuganhänger nach einem der Ansprüche 1 bis 3, dadurch gekennzeichnet, daß die Bugwand (3) aus einem größeren Oberteil (3a) und einem kleineren Unterteil (3b) besteht, die - von ihrer Verbindungskante (4) ausgehend - nach rückwärts geneigt verlaufen.

6. Kraftfahrzeuganhänger nach einem der Ansprüche 1 bis 5, dadurch gekennzeichnet, daß die Bugwand eine Sandwich-Konstruktion ist, bei der die Innenwand, ein Skelett, Isoliermaterial und das außenliegende Blech unter Verwendung eines geeigneten Schaumklebers und unter Druck und Temperatur fest miteinander verklebt sind.

0210501

FIG. 1

FIG. 2

FIG. 3

FIG. 4